# FASCICULE DE BREVET EUROPEEN

(11) **EP 0 565 421 B1**
(45) Date de publication et mention de la délivrance du brevet: **06.03.1996**
(21) Numéro de dépôt: 93400876.4
(22) Date de dépôt: 05.04.1993
(51) Int. Cl.: C03C 15/00, G02B 6/38

(54) **Procédé de traitement collectif de capillaires de silice pour la formation de cônes d'entrée de fibres optiques monomodes à connecter**
Verfahren zur gemeinsamen Behandlung von Kapillarrohren aus Silicium-Dioxid, um dieselben mit einem kegelförmigen Einlass zu versehen, zum Verbinden monomoder, optischer Fasern
Process for collective treatment of silica capilliary tubes to form entry cones for monomode optical fibre connections

(30) Priorité: 07.04.1992 FR 9204225
(43) Date de publication de la demande: 13.10.1993
(73) Titulaire: FRANCE TELECOM, F-75015 Paris (FR)
(72) Inventeur: Perrin, Gabrielle, F-22300 Ploubezre (FR); Le Marer, René, F-22300 Tregastel (FR); Grosso, Philippe, F-22300 Lannion (FR)
(74) Mandataire: Schrimpf, Robert

(56) Documents cités:
- EP-A- 0 213 856
- EP-A- 0 423 999
- EP-A- 0 441 696
- EP-A- 0 458 690

## Description

La présente invention concerne un procédé de traitement collectif de capillaires de silice pour la formation de cônes d'entrée de fibres optiques monomodes à connecter.

L'invention trouve une application particulièrement avantageuse dans le domaine des techniques de raccordement pour fibres optiques monomodes.

Actuellement, plus de 90 % de la fabrication de fibres optiques concerne les fibres monomodes, et s'il était relativement facile de raccorder deux fibres multimodes de 50 µm de coeur, il devient évidemment plus difficile de faire coïncider deux coeurs monomodes de 8 µm. La précision relative d'alignement doit donc gagner un ordre de grandeur.

Pour connecter des fibres optiques monomodes, on utilise généralement des embouts de raccordement, appelés aussi ferrules, constitués par un corps de silice sensiblement cylindrique comportant un capillaire central de précision destiné à recevoir les fibres à raccorder. De plus, ledit capillaire est muni à ses deux extrémités de cônes d'entrée s'évasant vers l'extérieur de l'embout afin de faciliter l'introduction des fibres dans le capillaire.

Un procédé connu pour réaliser le capillaire de base consiste à étirer un barreau de silice présentant un trou central jusqu'à obtenir, par réduction dudit trou central, un capillaire de diamètre donné. Un tel procédé est connu de la demande de brevet européen EP-A-0441696, dans lequel un barreau de silice est préparé de manière à ce que le rapport du diamètre du trou central au diamètre extérieur du tube est amené à la valeur désirée pour le rapport du diamètre intérieur du capillaire au diamètre du barreau après étirage. Puis, le barreau de silice est étiré de façon homothétique pour amener le diamètre de trou central à la valeur du diamètre intérieur prévu pour le capillaire.

Cette technique de fibrage constitue un moyen de production industrielle d'embouts de raccordement, ou ferrules. En effet, on peut tirer du barreau de silice fibré 300 baguettes de capillaire d'un mètre de long par heure, ce qui représente un potentiel de 30000 ferrules de 1 cm à l'heure.

La transformation du capillaire en ferrules passe donc par un certain nombre d'étapes : collage des baguettes d'un mètre en fagots, puis tronçonnage des fagots en tranches de 1 cm d'épaisseur.
A ce stade, chacune des 100 tranches contient 300 embouts de raccordement non inutilisables en connectique. En effet, le diamètre du capillaire est de 126 µm et doit accepter une fibre de 125 µm. La manipulation est impossible sans un cône d'entrée pour faciliter l'introduction de la fibre dans le capillaire.

La demande de brevet européen EP-A-0458690 enseigne un procédé de réalisation de cônes d'entrée qui consiste à désassembler les ferrules après tronçonnage, à introduire sur un montage prévu à cet effet les pointes de deux aiguilles aux extrémités du capillaire, à surmouler une résine par injection à l'extérieur de l'ensemble et à retirer les aiguilles après séchage pour disposer d'un produit fini directement utilisable en connectique.

Toutefois, ce mode connu de réalisation de cônes d'entrée présente l'inconvénient de briser la chaîne de traitement collectif des ferrules puisque les cônes d'entrée sont formés de façon unitaire, faisant ainsi perdre tout l'avantage du procédé industriel de base. On peut en effet évaluer que le traitement unitaire, s'ajoutant le prix de la résine surmoulée, fait passer le prix de la ferrule de quelques centimes, coût de la matière première et du fibrage, à quelques francs.

Aussi, le but de la présente invention est de proposer un procédé de traitement collectif des ferrules qui permettrait de conserver l'avantage d'un potentiel considérable de production de ferrules de 30000 à l'heure, pour aboutir à des ferrules directement utilisables en connectique sans augmenter leur prix de revient.

Ce but est atteint, selon la présente invention, par la mise en oeuvre d'un procédé de traitement collectif de capillaires de silice pour la formation de cônes d'entrée de fibres optiques monomodes à connecter, notamment remarquable en ce qu'il comporte les étapes suivantes :
- à partir d'au moins un barreau composite de silice comprenant une zone centrale de silice dopée, de forme sensiblement cylindrique, et une zone extérieure de silice pure, ayant sensiblement la forme d'un anneau cylindrique entourant la zone centrale,
   perçage d'un trou central à travers ladite zone centrale du barreau composite,
- étirage du barreau composite percé jusqu'à obtenir un capillaire de diamètre intérieur donné,
- découpe du barreau composite étiré en une pluralité de baguettes de longueur donnée,
- assemblage et collage desdites baguettes en fagots,
- tronçonnage desdits fagots en une pluralité de tranches de longueur donnée,
- trempage de chaque face desdites tranches dans un bain d'attaque sélective jusqu'à obtenir, pour chaque capillaire, des cônes d'entrée de dimensions données, par différence des vitesses d'attaque dans la silice dopée et la silice pure.

A titre d'exemple, ladite silice dopée peut être de la silice dopée au fluor ou au germanium, et ledit bain d'attaque sélective est constitué par de l'acide fluorhydrique. L'attaque à l'acide fluorhydrique étant, dans ce cas, beaucoup plus rapide sur la silice dopée que sur la silice pure, il se forme un cône d'entrée dans le capillaire sans que le diamètre extérieur de la ferrule ne soit sensiblement attaqué.

Le surcoût d'un barreau dopé, usiné est nul puisque la matière première existe dans l'industrie de la fibre optique. En effet, lorsqu'on réalise une préforme pour fibre optique, une partie de cette préforme n'est pas utilisée au fibrage. Cette chute, qui normalement est jetée, a toutes les caractéristiques pour constituer, après usinage et avant fibrage, le barreau composite mis en oeuvre dans le procédé de l'invention.

La description qui va suivre en regard des dessins annexés, donnés à titre d'exemples non limitatifs, fera bien comprendre en quoi consiste l'invention et comment elle peut être réalisée.

La figure 1 est une vue en coupe d'un barreau composite de silice.

La figure 2 est une vue en coupe du barreau de la figure 1 après usinage.

La figure 3 est une vue en coupe du barreau de la figure 2 en cours d'étirage.

La figure 4 est une vue en perspective d'un fagot de baguettes de capillaires issues de l'opération d'étirage montrée à la figure 3.

La figure 5 est une vue en perspective d'une tranche résultant du tronçonnage du fagot de la figure 4.

La figure 6 est une vue partielle en coupe de la tranche de la figure 5 lors de l'attaque chimique d'une de ses faces.

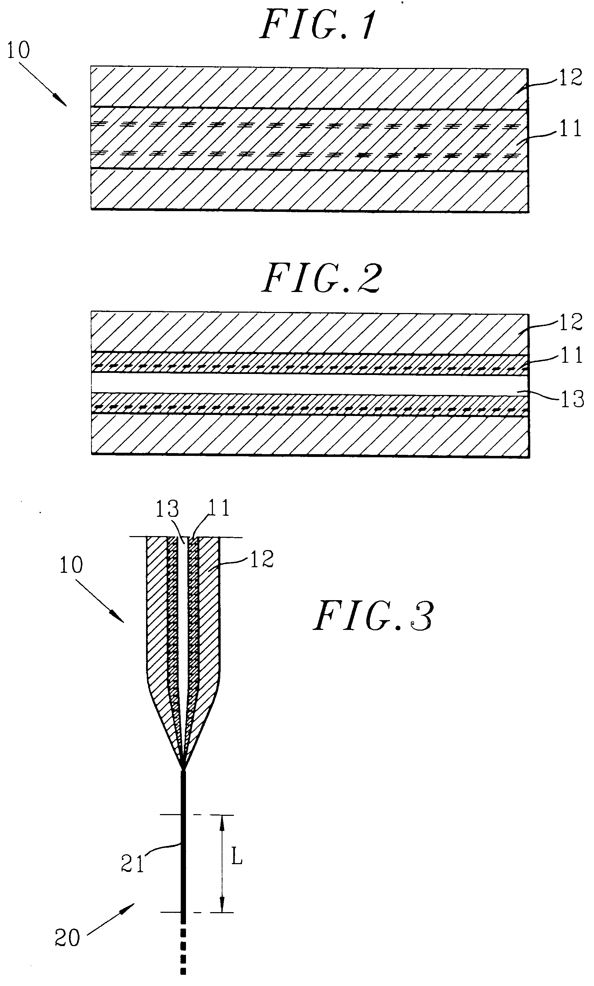

La figure 1 montre en coupe un barreau composite 10 de silice provenant, par exemple, d'une préforme pour la réalisation de fibres optiques en silice. Ce barreau 10 comprend une zone centrale 11 de silice dopée, de forme sensiblement cylindrique dont le diamètre est au moins égal à 10 mm. Les dopants de la zone centrale peuvent être du fluor ou du germanium sous une concentration comprise entre 10 et 15 %. Le barreau 10 comprend également une zone extérieure 12 de silice pure ayant sensiblement la forme d'un anneau cylindrique entourant ladite zone centrale 11. Le diamètre de ladite zone extérieure 12 est par exemple de 40 mm.

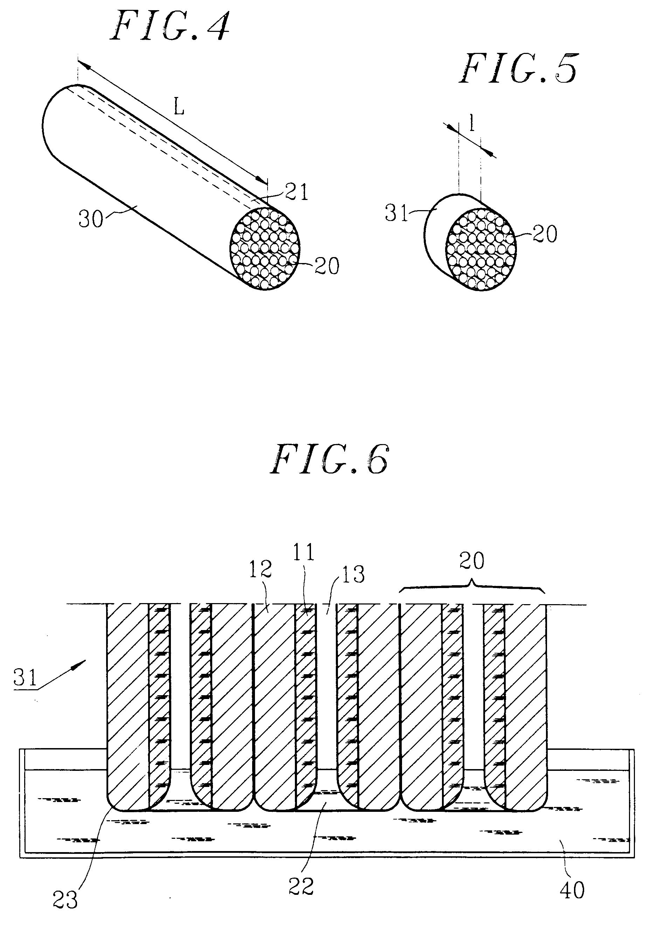

Comme l'indique la figure 2, la zone centrale dopée 11 du barreau composite 10 est percée par usinage d'un trou central 13 de diamètre de 3,5 mm, inférieur au diamètre de la zone centrale, pour un diamètre extérieur du tube 10 de 40 mm. Puis, conformément à la figure 3, le barreau 10 est étiré jusqu'à obtenir un capillaire 20 de diamètre intérieur donné de 126 µm par exemple. L'opération d'étirage peut être effectuée de manière homothétique, comme décrit dans la demande de brevet européen EP-A-0441696. Dans ce cas, le diamètre extérieur du tube capillaire 20 est de 2 mm environ.

Le barreau 10 étiré, ou capillaire 20, est découpé en une pluralité de baguettes 21 de longueur L de un mètre par exemple.

Ainsi qu'on peut l'observer sur les figures 4 et 5, les baguettes 21 de capillaire sont assemblées et collées en fagots 30, par lot de 300 par exemple. Les fagots 30 sont ensuite tronçonnés en une pluralité de tranches 31 de longueur 1 de 1 cm correspondant à la longueur des embouts de raccordement, ou ferrules, à réaliser. Dans ce cas, le nombre de tranches par fagot est de 100. La production potentielle de ferrules par fagot est donc de 30000.

La figure 6 montre que chaque face des tranches 31 est trempée dans un bain 40 d'attaque sélective, d'acide fluorhydrique par exemple, jusqu'à obtenir, pour chaque capillaire, des cônes 22 d'entrée de dimensions données, par différence des vitesses d'attaque dans la silice dopée et dans la silice pure. Après trempage de quelques heures, la Demanderesse a montré que les cônes 22 d'entrée formés présentent une base de 500 µm pour une profondeur de 1,1 mm. Les cônes d'entrée sont donc suffisamment ouverts pour introduire sans difficulté une fibre optique de 125 µm de diamètre.

La concentration de 10 à 15 % de la silice dopée est suffisante pour provoquer une grande différence de vitesse d'attaque entre la zone centrale 11 et la zone extérieure 12 du capillaire. Le diamètre extérieur n'est pratiquement pas entamé sauf un léger chanfrein 23 très utile par ailleurs pour éviter les éclats.

## Revendications

1. Procédé de traitement collectif de capillaires de silice pour la formation de cônes d'entrée de fibres optiques monomodes à connecter, caractérisé en ce qu'il comporte les étapes suivantes :
- à partir d'au moins un barreau composite (10) de silice comprenant une zone centrale (11) de silice dopée, de forme sensiblement cylindrique, et une zone extérieure (12) de silice pure, ayant sensiblement la forme d'un anneau cylindrique entourant la zone centrale (11), perçage d'un trou central (13) à travers ladite zone centrale (11) du barreau composite (10),
- étirage du barreau composite percé jusqu'à obtenir un capillaire (20) de diamètre intérieur donné,
- découpe du barreau composite étiré en une pluralité de baguettes (21) de longueur (L) donnée,
- assemblage et collage desdites baguettes (21) en fagots (30),
- tronçonnage desdits fagots (30) en une pluralité de tranches (31) de longueur (1) donnée,
- trempage de chaque face desdites tranches (31) dans un bain (40) d'attaque sélective jusqu'à obtenir, pour chaque capillaire (20), des cônes (22) d'entrée de dimensions données, par différence des vitesses d'attaque dans la silice dopée et la silice pure.

2. Procédé selon la revendication 1, caractérisé en ce que ledit barreau composite (10) est extrait d'une préforme pour la réalisation de fibres optiques de silice.

3. Procédé selon l'une des revendications 1 ou 2, caractérisé en ce que ladite silice dopée est dopée au fluor.

4. Procédé selon l'une des revendications 1 ou 2, caractérisé en ce que ladite silice dopée est dopée au germanium.

5. Procédé selon l'une quelconque des revendications 1 à 4, caractérisé en ce que ledit bain (40) d'attaque sélective est constitué par de l'acide fluorhydrique.

## Claims

1. A method of treating silica capillary tubes collectively to form entry cones for monomode optical fiber connections, the method being characterized in that it comprises the following steps:
• starting from at least one composite bar (10) of silica having a central zone (11) of doped silica that is substantially cylindrical in shape with an outer zone (12) of pure silica that is substantially in the form of a cylindrical annulus surrounding the central zone (11), piercing a central hole (13) along said central zone (11) of the composite bar (10);
• stretching the pierced composite bar to obtain a capillary tube (20) of given inside diameter;
• cutting up the stretched composite bar into a plurality of sticks (21) of given length (L);
• assembling and gluing said sticks (21) together in bundles (30);
• slicing said bundles (30) into a plurality of slices (31) of given length (*l*); and
• immersing each face of said slices (31) in a selective etching bath (40) so as to obtain entry cones (22) of given dimensions for each capillary tube (20) by the difference in etching speeds in doped silica and in pure silica.

2. A method according to claim 1, characterized in that said composite bar (10) is taken from a preform for making silica optical fibers.

3. A method according to claim 1 or 2, characterized in that said doped silica is doped with fluorine.

4. A method according to claim 1 or 2, characterized in that said doped silica is doped with germanium.

5. A method according to any one of claims 1 to 4, characterized in that said selective etching bath (40) is constituted by hydrofluoric acid.

## Patentansprüche

1. Verfahren zur gemeinsamen Behandlung von Kapillaren aus Siliziumdioxid zum Bilden von Eintrittskegeln für zu verbindende Einmodenglasfasern, gekennzeichnet durch folgende Schritte:
- ausgehend von mindestens einem Verbundstab (10) aus Siliziumdioxid mit einer Mittelzone (11) aus dotiertem Siliziumdioxid mit im wesentlichen zylindrischer Form und einer Außenzone (12) aus reinem Siliziumdioxid mit im wesentlichen der Form eines die Mittelzone (11) umgebenden zylindrischen Rings, Bohren eines Mittellochs (13) durch die besagte Mittelzone (11) des Verbundstabes (10),
- Strecken des durchbohrten Verbundstabes zum Erhalten einer Kapillare (20) mit gegebenem Innendurchmesser,
- Schneiden des gestreckten Verbundstabes in eine Mehrzahl von Stäbchen (21) mit gegebener Länge (L),
- Zusanmenfügung und Kleben der besagten Stäbchen (21) zu Bündeln (30),
- Zerschneiden der besagten Bündel (30) in eine Mehrzahl von Scheiben (31) mit gegebener Länge (l),
- Eintauchen jeder Oberfläche der besagten Scheiben (31) in ein selektives Ätzbad (40) zum Erhalten, für jede Kapillare (20), von Eintrittskegeln (22) mit gegebenen Abmessungen durch den Unterschied der Ätzgeschwindigkeiten im dotierten Siliziumdioxid und im reinen Siliziumdioxid.

2. Verfahren nach Anspruch 1, dadurch gekennzeichnet, daß der besagte Verbundstab (10) aus einem Vorformling für die Herstellung von Siliziumdioxidglasfasern gewonnen ist.

3. Verfahren nach einem der Ansprüche 1 oder 2, dadurch gekennzeichnet, daß das besagte dotierte Siliziumdioxid mit Fluor dotiert ist.

4. Verfahren nach einem der Ansprüche 1 oder 2, dadurch gekennzeichnet, daß das besagte dotierte Siliziumdioxid mit Germanium dotiert ist.

5. Verfahren nach einem der Ansprüche 1 bis 4, dadurch gekennzeichnet, daß das besagte selektive Ätzbad (40) aus Fluorwasserstoffsäure besteht.
